# EUROPÄISCHE PATENTANMELDUNG

(11) **EP 3 690 143 A1**
(43) Veröffentlichungstag der Anmeldung: **05.08.2020**
(21) Anmeldenummer: 20154658.7
(22) Anmeldetag: 30.01.2020
(51) Int. Cl.: E02B 11/00, E02B 13/00, E03F 1/00

(54) **PLATTENRIGOLE ZUR ENTWÄSSERUNG**

(30) Priorität: 31.01.2019 DE 202019100580 U
(71) Anmelder: Depotec GmbH, 97857 Urspringen (DE)
(72) Erfinder: Schmitt Andreas, 97857 Urspringen (DE)
(74) Vertreter: Gleim, Christian Ragnar

(57) **Zusammenfassung**

Plattenrigole 1 zur Entwässerung, bestehend aus mindestens einem Rigolenkorb, der von mindestens einer Abdichtungsplatte 4 derart wasserdicht umschlossen ist, um eine transportable Plattenrigole 1 zu bilden, die vorgefertigt auf eine Baustelle transportiert und vor Ort auf der Baustelle nur mittels eines daran angeordneten Anschlussadapters 5 an einen Zulaufkanal angeschlossen wird.

## Beschreibung

Die Erfindung betrifft eine Plattenrigole gemäß dem unabhängigen Anspruch.

Die Erfindung liegt im technischen Gebiet von Entwässerungsanlagen für Niederschlagswasser. Aufgrund der Versiegelung von Wohn- und Gewerbeflächen kann Regenwasser oft nicht natürlich versickern.

Es ist bekannt, Regenwasser am Ort des Niederschlags in Rigolenanlagen zu speichern und nach und nach wieder dem natürlichen Kreislauf durch Versickern zuzuführen. Versickerung bezeichnet hier das Einbringen von Niederschlagswasser über technische Anlagen in den Boden.

Eine Rigolenanlage ist im Prinzip ein Wasserspeicher mit einem entsprechend der versiegelten Fläche und der zu erwartenden Niederschlagsmenge dimensioniertem Volumen, um insbesondere auf versiegelten Flächen, wie Parkplätzen oder Sportanlagen, auftretendes Regenwasser zwischen zu speichern. Eine Rigolenanlage zeichnet sich durch eine schnelle Wasseraufnahmefähigkeit bzw. gute Rückhaltewirkung aus und hat ein entsprechend dimensioniertes Volumen, das derart ausgestaltet ist, dass das Regenwasser möglichst ungehindert einfließen kann. Derartige Rigolenanlagen können sowohl als Regenwasserspeicher als auch zur Versickerung, aber auch zu beidem gleichzeitig dienen.

Konventionelle Rigolenanlagen haben ein im Wesentlichen hohles Volumen, das von Rigolenkörben aus Kunststoff gebildet wird. Die Rigolenkörbe haben ein entsprechend ausgesteiftes inneres Volumen, um eine hohe Druckfestigkeit zu gewährleisten. Solche Rigolenkörbe sind derart stabil ausgebildet, dass sogar der Einbau unterhalb von versiegelten Verkehrsflächen, wie Wege, Straßen oder Parkplätze, möglich ist.

In bekannten Rigolenanlagen wird eine Vielzahl von Rigolenkörben zusammen in großem Volumen unterirdisch verbaut. Dazu werden die einzelnen Rigolenkörbe aneinander gestapelt, also nebeneinander und/oder übereinander. Derartige Rigolenanlagen können in individueller Größe zusammengebaut werden. Dazu wird zunächst eine Baugrube an der Baustelle ausgehoben, zum Beispiel an dem Ort, an dem später die versiegelte Fläche liegt. Die Grube wird entsprechend der benötigten Größe der Rigolenanlage dimensioniert, wobei der Baugrund entsprechend tragfähig sein muss. Es kann eine Sauberkeitsschicht aus Kies eingebracht werden. Nach der Erstellung einer ebenen Fläche wird die Baugrube mit wasserdurchlässigem Vlies ausgelegt.

Um einen Speicher zu realisieren, kann zusätzlich eine Abdichtungsbahn in die Baugrube gelegt bzw. in der Baugrube ausgebreitet werden. Die Abdichtungsbahn kann wiederum in ein Schutzvlies eingelegt werden. Nach dem Einbringen der Rigolenkörbe, werden diese von dem Vlies oder der Abdichtungsbahn umschlossen. Die Abdichtungsbahn wird dazu verschweißt, um das von den gestapelten Rigolenkörben gebildete Volumen wasserdicht zu verschließen.

Die Rigolenkörbe werden im Ganzen oder in Teilen zerlegt und gestapelt auf die Baustelle transportiert. Jeder Rigolenkorb besteht aus Kunststoff und hat eine druckstabile innere Struktur (Waben, Ständer, Säulen) zur Erzeugung einer guten mechanischen Druckstabilität. Die Rigolenkörbe sind von Seitenwänden umschlossen. Die Rigolenkörbe werden entsprechend nebeneinander zu einem Block angeordnet und miteinander über u-förmige Steckelemente verbunden. Die Anzahl der Rigolenkörbe in einem Block wird entsprechend der versiegelten Fläche bzw. der erwarteten Wassermenge gewählt.

Der Block aus Rigolenkörben wird nun von dem Vlies umschlossen. Das kann abhängig vom Verfüllmaterial durchgeführt werden. Sofern eine Rückhaltung von Niederschlagswasser gewünscht ist, werden die von dem Vlies umschlossenen Rigolenkörbe zusätzlich von der bereits darunter liegend angeordneten Abdichtungsbahn umschlossen. Dazu werden die seitlich liegenden Abdichtungsbahnteile um die Rigolenkörbe gezogen und die übereinanderlappenden Abschnitte miteinander verschweißt. Durch die von Vlies und Abdichtungsbahn gebildete Umhüllung können Stutzen zum Anschluss an Wasserrohre angeordnet werden.

Das Problem beim Aufbau vor Ort auf der Baustelle ist, dass der Aufbau lange dauert. Dazu ist es bekannt, transportable Rigoleneinheiten zur Entwässerung aus mehreren Rigolenkörben, die von einer Abdichtungsfolie umschlossen sind, im umschlossenen Zustand vorgefertigt auf eine Baustelle zu verbringen. Vor Ort auf der Baustelle werden diese nur mittels eines Anschlussadapters an einen Zulaufkanal angeschlossen.

Bei derartigen Rigolenanlagen mit einer Abdichtungsbahn aus Kunststofffolie ist es ein bekanntes Problem, dass die Abdichtungsbahn einer Einwirkung von mechanischen Kräften, welche beim Transport besonders stark sind, nicht ausreichend standhält und dabei Schaden nimmt. Dies kann zu einer Undichtigkeit der Abdichtungsbahn gegenüber Wasser führen.

Ferner sind aus dem Stand der Technik die DE 10 2016 115 274 A1, die DE 20 2005 007 638 U1, die DE 20 2011 106 904 U1 und die DE 696 23 414 T2 bekannt.

Die Erfindung löst das Problem, indem eine Plattenrigole gemäß dem unabhängigen Anspruch bereitgestellt wird. Vorteilhafte Aspekte bilden den Gegenstand der jeweiligen Unteransprüche.

Die Erfindung umfasst eine Plattenrigole zur Entwässerung, bestehend aus mindestens einem Rigolenkorb, der von mindestens einer Abdichtungsplatte derart wasserdicht umschlossen ist, um eine transportable Plattenrigole zu bilden, die vorgefertigt auf eine Baustelle transportiert und vor Ort auf der Baustelle nur mittels mindestens eines daran angeordneten Anschlussadapters an einen Zulaufkanal angeschlossen wird. Die Abdichtungsplatte hat eine ausreichende mechanische Stabilität, so dass die Plattenrigole im vorgefertigten Zustand auf eine Baustelle transportiert werden kann, um vor Ort auf der Baustelle nur mittels mindestens eines Anschlussadapters an einen Zulaufkanal angeschlossen zu werden. Die Abdichtungsplatte umspannt die Rigolenkörbe vollständig und unmittelbar, so dass kein Vlies dafür benötigt wird. Vorgefertigt ist die Plattenrigole, insofern die Abdichtungsplatte vollständig verschweist ist. Für den Zulauf werden die Anschlussadapter (Stutzen) mit einem Abwassergulli verbunden. Die Plattenrigole kann für den Ablauf einen weiteren Anschlussadapter (Stutzen) haben, der mit einem Abwasserschacht verbunden wird. Die Anschlussadapter können entsprechend dimensionierte Wasserrohre (z. B. Kunststoffrohre) sein, die am Rigolenkorb befestigt werden. Es ist möglich, die Rigolenkörbe zur Befestigung der Anschlussadapter vorzufertigen, zum Beispiel mit an Sollbruchstellen heraustrennbaren Teilstücken. Außerdem lassen sich Inspektions- und Spülschächte mit den Rigolenkörben direkt verbinden und/oder es ist ein Be- und Entlüftungskanal angeschlossen, der derart dimensioniert ist, um ein schnelles Ein- und Auslaufen des Wassers zu gewährleisten. Die Platten sind bevorzugt aus Kunststoff, insbesondere PE-HD hergestellt.

Gemäß einem bevorzugten Aspekt umfasst die Plattenrigole mindestens eine erste und eine zweite Abdichtungsplatte. Die erste und zweite Abdichtungsplatte kann aus mehreren miteinander verschweißten Kunststoffplatten bestehen. Zum Transport auf dem LKW ist es bekannt, die Rigolen in einer ähnlichen Breite (2 bis 3 m) herzustellen, aber mit unterschiedlichen Längen. Die Konstruktion kann dabei mit und ohne Riegelelemente (siehe unten) sein. Bei einer Konstruktion ohne Riegelelemente ist es so, dass eine Kunststoffplatte auf einer Fläche abgelegt wird und die Seitenwände daran befestigt werden. Dann wird eine weitere Kunststoffplatte, die Oberseite, mit den Kunststoffplatten verbunden.

Bevorzugt sind die erste und die zweite Abdichtungsplatte stoffschlüssig miteinander verbunden. Der Stoffschluss erlaubt eine wasserdichte Verbindung der Abdichtungsplatten. Die Überprüfung der Wasserdichte erfolgt vorteilhafterweise mittels Verfahren, die auf Druckänderung beruhen, mittels dem Einsatz eines Funkeninduktors oder mittels Wasserstandsmessung.

Vorteilhafterweise sind die erste und die zweite Abdichtungsplatte durch thermisches Fügen miteinander verbunden. Ein Beispiel dafür ist das Verschweißen von Kunststoffplatten. Das Verschweißen ermöglicht ein unlösbares Verbinden von Bauteilen unter Anwendung von Wärme und/oder Druck. Dabei werden die Werkstücke durch Schmelzen oder Erwärmen verbunden.

Gemäß einem weiteren vorteilhaften Aspekt umfasst die Plattenrigole mindestens ein Riegelelement zur Anordnung im Bereich von Plattenstößen. Das Riegelelement hat dazu eine Größe und Form, die ausreicht, um sich über den Plattenstoß hinweg auf beide Abdeckplatten zu erstrecken.

Bevorzugt ist das Riegelelement eine Kunststoffplatte mit einer Stärke im Bereich von 5 mm bis 20 mm, bevorzugt 8 mm bis 12 mm. Das so ausgestaltete Riegelelement ermöglicht zur Verbindung zweier Abdeckplatten, ein sicheres Verschweißen.

Ein weiterer vorteilhafter Aspekt sieht vor, dass das Riegelelement eine Kunststoffplatte mit einer Breite im Bereich von 5 cm bis 30 cm aufweist. Ein besonders bevorzugtes Beispiel sieht vor, dass der Bereich 10 cm bis 25 cm ist. Die Breite erlaubt ein gutes Handhaben, vor allem beim Verschweißen der einzelnen Elemente.

Besonders bevorzugt ist das Riegelelement aus einem thermisch fügbaren Material. Dabei kann das Riegelelement mit den Abdeckplatten verschweißt werden, um die Verbindung zu verstärken. Dabei können das Riegelelement und die Abdeckplatten aus dem gleichen Material sein.

Gemäß einem weiteren vorteilhaften Aspekt ist mindestens eine der Abdichtungsplatten u-förmig mit jeweils zwei Seitenabschnitten und einem Verbindungsabschnitt ausgebildet. Die u-förmige Gestaltung erlaubt eine effiziente Herstellung, wobei die Oberseite und die Seitenflächen der Plattenrigole in einem Arbeitsschritt mit einer Unterseite verbunden werden.

Besonders bevorzugt entspricht der Abstand der beiden Seitenabschnitte der Breite der Plattenrigole.

Die Erfindung wird im Folgenden anhand der in den Zeichnungen dargestellten Beispiele zusätzlich erläutert.

Es zeigen:
- Fig. 1: eine Plattenrigole; und
- Fig. 2: die Plattenrigole aus Fig. 1 in einem Querschnitt während der Herstellung.

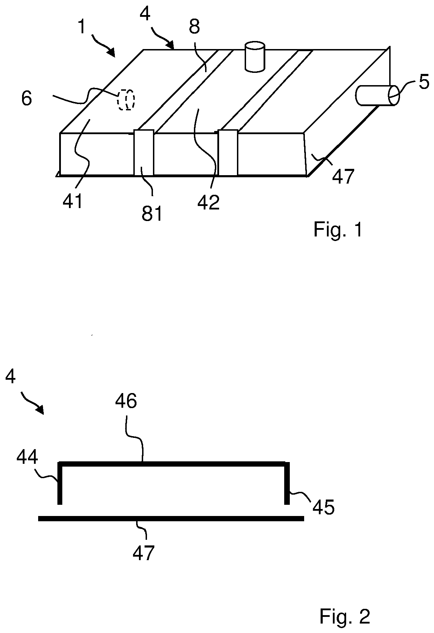

In **Fig. 1** ist ein Beispiel für eine transportable Plattenrigole 1 dargestellt. Die transportable Plattenrigole 1 wird zur Entwässerung von Niederschlagswasser in das Erdreich, zum Beispiel unterhalb einer versiegelten Fläche, eingebaut. Im vorliegenden Beispiel sind acht Rigolenkörbe von Abdichtungsplatten 4 umschlossen.

Die Abdichtungsplatten 4 umschließen die Rigolenkörbe derart wasserdicht, um eine transportable Plattenrigole 1 zu bilden, die vorgefertigt auf eine Baustelle transportiert und vor Ort auf der Baustelle nur mittels eines daran angeordneten Anschlussadapters 5 an einen Zulaufkanal angeschlossen wird. Vorgefertigt ist die Plattenrigole 1, insofern die Abdichtungsplatten 4 fertig installiert sind und die Rigolenkörbe vollständig wasserdicht umschließen.

Die transportable Plattenrigole 1 ist zum Transport derart dimensioniert, um auf der Ladefläche eines LKWs verstaut zu werden. Die Maße mit einer Länge im Bereich von 2 m bis 18 m (z. B. 6 m bis 12 m), einer Breite im Bereich von 0,5 m bis 2,5 m und einer Höhe im Bereich von 0,5 m bis 3 m sind bevorzugt, um die transportable Plattenrigole 1 im Werk vorzufertigen und auf einem LKW zur Baustelle zu transportieren.

Für den Zulauf wird der Anschlussadapter 5 (Stutzen) z. B. mit einem Abwassergulli (auf der Baustelle) verbunden. Die Plattenrigole 1 kann für den Ablauf einen weiteren Anschlussadapter 6 (Stutzen) haben, der z. B. mit einem Abwasserschacht verbunden wird.

Im gezeigten Beispiel ist die Abdichtungsplatte 4 aus mehreren miteinander verschweißten Abdichtungsplatten 41, 42 gebildet. Die Plattenrigole 1 umfasst mindestens eine erste und eine zweite Abdichtungsplatte 41, 42 wobei die erste und die zweite Abdichtungsplatte 41, 42 durch Verschweißen miteinander verbunden sind.

Dazu wird an jedem Stoß ein Riegelelement 8 angeordnet, welches Riegelelement 8 eine Kunststoffplatte mit einer Stärke im Bereich von 5 mm bis 20 mm (bzw. 8 mm bis 12 mm) ist. Das Riegelelement 8 ist eine Kunststoffplatte mit einer Breite im Bereich von 5 cm bis 30 cm (bzw. 10 cm bis 25 cm). Das Riegelelement 8 sowie die Abdichtungsplatten 4 bestehen aus einem thermisch fügbaren Material.

Die Abdichtungsplatten 4 umfassen eine stirnseitige Platte 47, die an der Oberkante und an den Seiten übersteht. Die Riegelelemente 8 umfassen Seitenlaschen 81, die an der Oberseite überstehen können.

Wie in **Fig. 2** zu sehen ist, ist die obere mindestens eine Abdichtungsplatte 4 u-förmig mit jeweils zwei sich nach unten erstreckenden Seitenabschnitten 44, 45 und einem, die Seitenabschnitte 44, 45 verbindenden, Verbindungsabschnitt 46 ausgebildet.

Der Abstand der beiden Seitenabschnitte 44, 45 entspricht dabei der Gesamtbreite der Plattenrigole 1.

## Patentansprüche

1. Plattenrigole (1) zur Entwässerung, bestehend aus mindestens einem Rigolenkorb, der von mindestens einer Abdichtungsplatte (4) derart wasserdicht umschlossen ist, um eine transportable Plattenrigole (1) zu bilden, die vorgefertigt auf eine Baustelle transportiert und vor Ort auf der Baustelle nur mittels eines daran angeordneten Anschlussadapters (5) an einen Zulaufkanal angeschlossen wird.

2. Plattenrigole (1) nach Anspruch 1, umfassend mindestens eine erste und eine zweite Abdichtungsplatte (41, 42).

3. Plattenrigole (1) nach Anspruch 2, wobei die erste und die zweite Abdichtungsplatte (41, 42) stoffschlüssig miteinander verbunden sind.

4. Plattenrigole (1) nach Anspruch 2, wobei die erste und die zweite Abdichtungsplatte (41, 42) durch thermisches Fügen, insbesondere Verschweißen, miteinander verbunden sind.

5. Plattenrigole (1) nach einem der vorangehenden Ansprüche, ferner umfassend mindestens ein Riegelelement (8) zur Anordnung im Bereich von Plattenstößen.

6. Plattenrigole (1) nach Anspruch 5, wobei das Riegelelement (8) eine Kunststoffplatte mit einer Stärke im Bereich von 5 mm bis 20 mm, bevorzugt 8 mm bis 12 mm ist.

7. Plattenrigole (1) nach Anspruch 5 oder 6, wobei das Riegelelement (8) eine Kunststoffplatte mit einer Breite im Bereich von 5 cm bis 30 cm, bevorzugt 10 cm bis 25 cm ist.

8. Plattenrigole (1) nach Anspruch 6 oder 7, wobei das Riegelelement (8) aus einem thermisch fügbaren Material besteht.

9. Plattenrigole (1) nach einem der vorangehenden Ansprüche, wobei mindestens eine der Abdichtungsplatten (4) u-förmig mit jeweils zwei Seitenabschnitten (44, 45) und einem Verbindungsabschnitt (46) ausgebildet ist.

10. Plattenrigole (1) nach Anspruch 9, wobei der Abstand der beiden Seitenabschnitte (44, 45) der Breite der Plattenrigole (1) entspricht.
